# EUROPEAN PATENT SPECIFICATION

(11) **EP 3 474 603 B1**
(45) Date of publication and mention of the grant of the patent: **24.02.2021**
(21) Application number: 17197557.6
(22) Date of filing: 20.10.2017
(51) Int. Cl.: H04W 48/06, H04W 48/18

(54) **METHOD FOR CONTROLLING THE ACCESS OF A USER EQUIPMENT TO A MOBILE COMMUNICATION NETWORK HAVING AT LEAST TWO NETWORK SLICES, SYSTEM, PROGRAM AND COMPUTER PROGRAM PRODUCT**
VERFAHREN ZUR STEUERUNG DES ZUGRIFFS EINES BENUTZERGERÄTS AUF EIN MOBILKOMMUNIKATIONSNETZWERK MIT MINDESTENS ZWEI NETZWERKDOMÄNE, SYSTEM, PROGRAMM UND COMPUTERPROGRAMMPRODUKT
PROCÉDÉ POUR CONTRÔLER L'ACCÈS D'UN ÉQUIPEMENT UTILISATEUR À UN RÉSEAU DE COMMUNICATION MOBILE AYANT AU MOINS DEUX DOMAINES DE RÉSEAU, SYSTÈME, PROGRAMME ET PRODUIT-PROGRAMME D'ORDINATEUR

(43) Date of publication of application: 24.04.2019
(73) Proprietor: Deutsche Telekom AG, 53113 Bonn (DE)
(72) Inventor: ALEKSIEV, Vasil, 1220 Wien (AT)
(74) Representative: Schwöbel, Thilo K.

(56) References cited:
- WO-A1-2017/173259
- LG ELECTRONICS: "Discussion on unified access control for 5G System", 3GPP DRAFT; C1-174175_DISCUSSION ON UNIFIED ACCESS CONTROL MECHANISM FOR 5GS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. CT WG1, no. Kochi (India); 20171023 - 20171027 16 October 2017 (2017-10-16), XP051349938, Retrieved from the Internet: URL:http://www.3gpp.org/ftp/tsg_ct/WG1_mm- cc-sm_ex-CN1/TSGC1_106_Kochi/docs/ [retrieved on 2017-10-16]
- "3rd Generation Partnership Project; Technical Specification Group Core Network and Terminals; Study on CT WG3 Aspects of 5G System - Phase 1; Stage 3 (Release 15)", 3GPP DRAFT; 29890-101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 10 September 2017 (2017-09-10), XP051314666, Retrieved from the Internet: URL:http://www.3gpp.org/ftp/Meetings_3GPP_ SYNC/CT/Docs/ [retrieved on 2017-09-10]
- XIAOMI (RAPPORTEUR): "Report of email discussion: [97bis#14][NR] Slicing", 3GPP DRAFT; R2-1709158 REPORT OF EMAIL DISCUSSION ON NR SLICING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318947, Retrieved from the Internet: URL:http://www.3gpp.org/ftp/Meetings_3GPP_ SYNC/RAN2/Docs/ [retrieved on 2017-08-20]
- CT1: "LS on unified Access Control for 5G NR", 3GPP DRAFT; S2-176841_S2-175322_S2-174088_S2-172898_C1 -171965, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Ljubljana, Slovenia; 20171023 - 20171027 2 October 2017 (2017-10-02), XP051359508, Retrieved from the Internet: URL:http://www.3gpp.org/ftp/tsg_sa/WG2_Arc h/TSGS2_123_Ljubljana/Docs/ [retrieved on 2017-10-02]
- VENCORE LABS ET AL: "5GS Support for MPS", 3GPP DRAFT; C1-174032_TR24890_MPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Kochi (India); 20171023 - 20171027 15 October 2017 (2017-10-15), XP051349678, Retrieved from the Internet: URL:http://www.3gpp.org/ftp/tsg_ct/WG1_mm- cc-sm_ex-CN1/TSGC1_106_Kochi/docs/ [retrieved on 2017-10-15]
- DEUTSCHE TELEKOM: "Discussion on network slice handling in UAC", 3GPP DRAFT; S1-174091, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Reno, Nevada, USA; 20171127 - 20171201 15 November 2017 (2017-11-15), XP051378758, Retrieved from the Internet: URL:http://www.3gpp.org/tsg_sa/WG1_Serv/TS GS1_80_Reno/docs/S1-174091.doc [retrieved on 2017-11-15]

## Description

### BACKGROUND

The present invention relates to a method for controlling the access of a user equipment to a mobile communication network, the mobile communication network comprising a plurality of radio cells as part of an access network of the mobile communication network, and the mobile communication network having a network slice, wherein the user equipment - being located, among other user equipments, in a specific radio cell of the plurality of radio cells - is attempting to gain access to the mobile communication network using the network slice of the mobile communication network usable within the specific radio cell.

Furthermore, the present invention relates to a system for controlling the access of a user equipment to a mobile communication network, the system comprising the user equipment and the mobile communication network, the mobile communication network comprising a plurality of radio cells as part of an access network of the mobile communication network, and the mobile communication network having a network slice, wherein the user equipment - being located, among other user equipments, in a specific radio cell of the plurality of radio cells - is configured to attempt to gain access to the mobile communication network using the network slice of the mobile communication network usable within the specific radio cell.

Furthermore, the present invention relates to a program and to a computer program product for controlling the access of a user equipment to a mobile communication network.

In cellular mobile systems or mobile communication networks, the access by a mobile station (or user equipment) to the mobile communication network is normally performed via a shared resource medium, such as the Random Access Channel (RACH). In case that the user equipment requests a service (such as, e.g., a voice call), it first contacts the mobile communication network (e.g. via the RACH) and typically gets subsequently communication resources (such as a Traffic Channel or a Dedicated Channel (DCH)) allocated to be used for delivering the communication service.

In order to prevent user equipments from accessing an overloaded radio cell, there exists the concept of access classes and access barring. For this concept, each device/subscriber identifer (such as an IMSI, International Mobile Subscriber Identifier) is assigned to a so-called "access class"; typically, a number of access classes (such as 10 access classes) are defined for ordinary users. Besides these access classes, special access classes might be defined (e.g. for emergency calls or for operator specific or other purposes). In order to prevent the access of a user equipment to the mobile communication network (i.e. typicallly to the access network or the nearest or best base station entity) in certain situations (i.e. overload situations), it is possible to bar access to the network by blocking access attempts using access barring.

Thus in critical situations with a lot of users trying to have a service from the mobile communication network, the operator can assure preventing overload situations and providing proper access to different users according to their needs and duties. Access classes are available for user equipments based on different criteria. In EPC networks (Evolved Packet Core networks), there are different barring mechanisms specified to protect the network, such as Access Class Barring (ACB), Service Specific Access Control (SSAC), access control for CSFB (Circuit Switched Fallback), EAB (Extended Access Barring), , all based on access classes. The network shall be able to support access control based on the type of the access attempt - mobile originated data or mobile originated signalling. The user equipment determines the barring status based on the information provided from the network and performs the access attempt accordingly.
SSAC applies independent access control for telephony services (MMTEL) for mobile originating session requests from idle-mode and connected-mode.
Access control for CSFB provides a mechanism to prohibit the user equipment to access E-UTRAN to perform CSFB. It minimizes service availability degradation caused by mass simultaneous mobile originating requests for CSFB and increases availability of the resources for the user equipment to access other services.
EAB is a mechanism for the operator to control Mobile Originating access attempts from user equipments that are configured for EAB in order to prevent overload of the access network and/or the core network. In congestion situations, the operator can restrict access from user equipments configured for EAB while permitting access from other user equipments. User equipments configured for EAB are considered more tolerant to access restrictions than other user equipments.

In 5G systems (i.e. mobile communication network of the fifth generation of mobile networks), there is single Unified Access Control (UAC) where operators control accesses of each category. In UAC, each access attempt is categorized into one of the access categories. The UAC support allows inclusion of additional standardized access categories and supports operators to flexibly define operator-defined access categories using their own criterion (e.g. applications etc.). Based on operator's policy, the 5G system shall be able to prevent user equipments from accessing the mobile communication network using relevant barring parameters that vary depending on access category. Access categories are defined by combination of conditions related to user equipment and type of access attempt used.

LG Electronics: "Discussion on unified access control for 5G System", 3GPP Draft; C1-174175, vol. CT WG1, no. Kochi (India); 20171023-20171027, XP051349938 discusses unified access control mechanisms for 5G Systems in user equipment side. Xiaomi (Rapporteur): "Report of email discussion: [97bis#14][NR] Slicing", 3GPP Draft; r2-1709158, vol. RAN WG2, no. Berlin, Germany; 20170821 - 20170825, XP051318947 discusses network slicing impacts on idle mode operation. "3rd Generation Partnership Project; Technical Specification Group Core Network and Terminals; Study on CT WG3 Aspects of 5G System - Phase 1, Stage 3 (Release 15)", 3GPP Draft; TR 29.890 V. 1.0.1 XP051314666 describes requirements, procedures, service interfaces (for service-based architecture) and protocols from CT3 aspects of 5G Systems.

### SUMMARY

An object of the present invention is to provide a technically simple, effective and especially cost effective solution for better and more effectively controlling of the access of a user equipment to a mobile communication network (by means of a method, a system, a mobile communication network, a program and a computer program product) in a cost-effective manner, wherein the mobile communication network has a network slice.

The object of the present invention is achieved by a method according to claim 1.

According to the present invention, a slice priority indication (or network slice priority information) is introduced in addition to the conventionally known unified access control (i.e. barring of user equipment access attempts regarding already specified access categories). This slice priority indication (or network slice priority information) introduces the possibility of a combination of the access categories together with network slices in terms of access barring.

The rules regarding the conventionally known unified access control-mechanism (i.e. regarding access categories and barring) are already defined in 3GPP standards and the use of a slice priority indication (or network slice priority information) according to the present invention advantageously enhances this mechanism, thereby adding additional benefits. If the slice priority indication (or network slice priority information) is defined in unified data management (UDM) as an additional indicator to each network slice the user equipment is allowed to use, certain subscribers (or user equipments) can have a priority (i.e. not to be part of Unified Access Control; hence, to have an increased access probability) in that particular network slice. According to such a scenario, such a subscriber or user equipment would be subjected to the standard access barring (i.e. the standard access barring of access categories) in other network slices (i.e. outside of that network slice). According to other variants or use cases of the present inventions, this indicator (or network slice priority information) can also be used to have a negative meaning - e.g. for users with a priority access to be subjected to a more restrictive access barring behaviour in this network slice.

In case that the slice priority indication (or network slice priority information) is transmitted (broadcasted) from a network element as a characteristic of a network slice together with a slice information, and in the mobile communication network, there is currently an activated access barring mechanism (e.g. because of different overload situations), it is advantageously possible according to the present invention that the use of the slice priority indication (or network slice priority information) according to the present invention can stop the use of access barring in this certain network slice. In another situation, it can also be used in a negative way (i.e. such that the access probability is reduced) - e.g. such that only in this network slice, access barring is valid or started. It is also possible and preferred according to the present invention to broadcast this slice priority information together with the broadcasted information for activation of the (or an) access barring mechanism regarding access categories.

Hence, the slice priority indication (or network slice priority information) advantageosly provides the possibility that some user equipments (or wireless communication devices, WCDs), subscribed in one or more network slices, are provided with a higher or lower priority (or network access probability) than other user equipments when initiating access attempts in a certain network slice. According to alternative variants of the present invention, it is advantageously possible that the use of network slice priority indication (or network slice priority information) can also put a different correction factor on the percentage of the baring defined for the respective access barring.

In 5G system, slicing (or network slicing) enables the creation of end to end partitioned network infrastructure from the user equipment to the core network which enables and provides different behavior to fulfil the requirements of distinct services, applications and customers. Currently, using access categories (such as access classes or access barring) is not related to slicing (or network slices). According to the present invention, a unified access control, extended with slicing information advantageously provides the possibility to enable priority access between different network slices, and thus allowing better protection against overload situations and providing users from different network slices with proper access to services.

According to the present invention, the access of a user equipment to a mobile communication network is controlled in an enhanced manner. The mobile communication network comprises a plurality of radio cells (or radio coverage areas), typically as part of an access network of the mobile communication network, and the mobile communication network has or provides support for a network slice and at least one further network slice. According to the present invention, it is assumed that the user equipment is located, among other user equipments, in a specific radio cell of the plurality of radio cells, and is attempting to gain access to the mobile communication network using the network slice of the mobile communication network usable within the specific radio cell.

The invention first relates to a method for controlling the access of a user equipment (20) to a mobile communication network according to claim 1. According to the present invention, two different situations are considered In a first situation, an access barring-mechanism is used within at least a portion of the mobile communication network, covering the considered (specific) radio cell. That means that an access barring of user equipments (or of access attempts performed by user equipments) within that considered (or specific) radio cell is applied based on access categories assigned to such user equipment attempts, and a predetermined barring probability (of, e.g., 50%) is applied to access attempts of such user equipments. According to the first situation or first variant considered of the present invention, this access probability of the user equipment (of gaining access to the mobile communication network) is adapted - based on the user equipment using the network slice - compared to using the standard access-category-barring-mechanism, i.e. a network slice-specific behaviour is realized according to the present invention, where the user equipment (or the plurality of user equipments) using one network slice (or a plurality of network slices) has/have a different access probability compared to using a different network slice (for which the access probability (or access probabilities) according to the standard access-category-barring-mechanism applies).
In a second situation or second variant considered of the present invention, the access probability for the user equipment of gaining access to the mobile communication network using the network slice is adapted in a network slice-specific manner (i.e. it is not supposed that an access barring-mechanism is applied in a manner unspecific to the network slice used by the user equipment, or, otherwise stated, the application of an access barring mechanism (especially based on access categories) is not necessarily implemented or activated in other network slices than the network slice).

According to the present invention, in both situations or variants, in a first step, a network slice priority information is stored in the user equipment (or in a secure element of the user equipment or within the user equipment) or transmitted to the user equipment (or to a secure element of the user equipment or within the user equipment), wherein the network slice priority information indicates an adaption of an access priority, regarding the user equipment attempting to gain access to the mobile communication network using the network slice. Additionally, in a second step, subsequent to the first step, the user equipment, using the network slice, is provided access to the mobile communication network taking into account the adaption of the access priority.

In the first situation or according to the first variant of the present invention, as the application of an access barring-mechanism is supposed (in a non-network slice-specific manner) (and, hence, such access barring-mechanism is also applied within the network slice of the user equipment), the use of the network slice priority information corresponds to a modification of the access priority or access probability of the user equipment. In the second situation or according to the second variant of the present invention, the use of the network slice priority information corresponds to a network slice-specific application of an access priority or access probability of the user equipment.

Regarding the first situation (or according to the first variant) as well as regarding the second situation (or according to the second variant) of the present invention, the "network slice priority information" corresponds to a "network slice access barring priority information".

According to the present invention, it is preferred that - besides the network slice - the at least one further network slice of the mobile communication network is usable within the specific radio cell, wherein, in the first step, a further network slice priority information is stored in or transmitted to the user equipment or a secure element of the user equipment, wherein the further network slice priority information indicates an adaption of a further access priority, regarding the user equipment attempting to gain access to the mobile communication network using the at least one further network slice, and wherein, in the second step, the user equipment, using the at least one further network slice, is provided access to the mobile communication network taking into account the adaption of the further access priority within the at least one further network slice by the further network slice priority information.

Thereby, it is advantageously possible to apply the inventive method and especially the use of the network slice priority information not only to one network slice (or one group of network slices) but to a plurality of network slices (or a plurality of different groups of network slices).

According to a preferred embodiment of the present invention, the network slice priority information and/or the further network slice priority information is specific to the user equipment, and especially part of the subscription profile or subscription information of the user equipment, wherein especially the network slice priority information specifically applies to the network slice or applies to the network slice and additionally to the at least one other network slice of the mobile communication network and/or wherein especially the further network slice priority information specifically applies to the at least one further network slice or applies to the at least one further network slice and additionally to still another network slice of the mobile communication network, wherein especially the subscription profile or subscription information of the user equipment is stored in a network node of the mobile communication network, especially in a network node providing unified data management functionality.

By means of providing an embodiment where the use of the network slice priority information (and/or of the further network slice priority information) is specific to the user equipment considered, it is advantageously possible according to the present invention to apply the benefits of the present invention with a user equipment-specific granularity. In such a situation, it is especially preferred that such user equipment-specific information is stored as part of the subscription profile or subscription information of the user equipment, especially in a network node of the mobile communication network such as a network node providing unified data management functionality. In case such a user equipment (having the network slice priority information as part of its subscription profile or subscription information) is present in a radio cell with an activated access barring mechanism, it is advantegaously possible that such network slice priority information as part of its subscription profile or subscription information overwrites the access barring mechanism locally applied. Hence, according to this variant (or embodiment) of the present invention, the network slice priority information is a part of a user equipment subscription profile or subscription information.

According to a further preferred embodiment of the present invention, the network slice priority information is related to a plurality of or all user equipments within the specific radio cell - besides the user equipment at least one other user equipment -, wherein the network slice priority information is transmitted to the plurality of user equipments within at least the specific radio cell, especially by means of a cell broadcast mechanism or by means of an over-the-air mechanism, wherein especially the network slice priority information - being related to a plurality of or all user equipments within the specific radio cell, besides the user equipment at least one other user equipment - specifically applies to the network slice or applies to the network slice and additionally to at least one other network slice of the mobile communication network.

By means of relating the network slice priority information (and/or the further network slice priority information) to a plurality of user equipments (especially all user equipments, i.e. besides the user equipment at least one other user equipment) within the specific radio cell that are using the network slice (or the network slice and additionally to at least one other network slice of the mobile communication network), it is advantageously possible that a multitude of user equipments can be provided modified or adapted access probability in a network slice-specific manner. Especially, this means that there is no user equipment-specific assigment of the network slice priority information to a specific user equipment (of the plurality of user equipments within the specific radio cell). To the contrary, the fact that the plurality of user equipments behave differently after the network slice priority information is transmitted to these user equipments stems merely from the fact that these user equipments are present in the considered specific radio cell (and does not necessarily have something to do with the individual subscription profiles of these user equipments). Hence, according to this variant (or embodiment) of the present invention, the network slice priority information is (not at all part of a user equipment subscription profile or subscription information but) a locally broadcast information informing the nearby user equipments of a network slice-specific modification of access barring.

According to a further preferred embodiment of the present invention, the adaption of the further access priority - regarding the at least one further network slice by the further network slice priority information - corresponds to maximally increasing the further access probability such that an access barring based on an access-barring-mechanism is avoided or switched off.

By means of maximally increasing the access probability and the further access probability such that an access barring based on an access-category-barring-mechanism (or unified access control-mechanism) is avoided or switched off, it is advantageously possible to prioritize either all user equipment using the respective network slice, or - in case that the network slice priority information is used in a user equipment-specific manner - only one (or a plurality of) specific user equipment(s) within (or using that) network slice (or group of network slices).

According to the present invention, the adaption of the further access priority - regarding the at least one further network slice by the further network slice priority information - corresponds to increasing or reducing the further access probability, especially in the sense of a correction factor or correction value, compared to the probability applying an access barring based on an access-category-barring-mechanism (or unified access control-mechanism). According to a further embodiment of the present invention the adaption of the access priority - regarding the network slice by the network slice priority information - corresponds to increasing or reducing the further access probability by applying a correction factor or correction value, compared to the probability applying an access barring based on an access-category-barring-mechanism (or unified access control-mechanism).

Alternatively to maximally increasing the access probability and/or the further access probability, it is also possible and preferred according to the present invention that (by means of using the network slice priority information) the access priority (and/or - by means of using the further network slice priority information - the further access priority) is adapted or modified corresponding to an increase or a reduction of the access probability (and/or the further access probability) of the respective (considered) user equipment (or group of user equipments). Thereby, it is advantageously possible to achive a good granularity regarding the access probability.
It is possible and preferred according to the present invention that the network slice priority information (and/or the further network slice priority information) corresponds to an absolute value (e.g. such as indicating an access probability of 10% or 20% or 30% or 50% or the like) of the access probability (independent from access barring value of an access barring-mechanism outside of the considered network slice (or network slices).
Alternatively, it is also possible and preferred according to the present invention that the network slice priority information (and/or the further network slice priority information) corresponds to a relative value (depending on the access probability defined by the access barring value of an access barring-mechanism outside of the considered network slice (or network slices)) - e.g. such as indicating an access probability of 10% more or 10% less (or 20% more or 20% less, or 30% more or 30% less) than the access probability as defined by the access barring value of an access barring-mechanism outside of the considered network slice (or network slices), or
such as indicating a multiplying factor to applied to reduce or to increase the access probability as defined by the access barring value of an access barring-mechanism outside of the considered network slice (or network slices).

According to still another preferred embodiment of the present invention, it is preferred that - in order to be able to assign network capacity to the network slice, and in addition to a network slice-specific adaption of the access probability of the user equipment being able to gain access to the mobile communication network using the network slice - an offload message is broadcasted in the specific radio cell, wherein by means of the offload message at least one ongoing communication session is terminated, thereby freeing network resources being able to be assigned to the network slice, the network slice especially being a mission critical service slice.

Thereby, it is advantageously possible according to the present invention that the capacity of a network slice can be adapted effectively.

According to still a further preferred embodiment of the present invention, the network slice priority information is applied to the user equipment in case the user equipment is roaming and uses a network slice of a further mobile communication network compared to the mobile communication network.

Thereby, it is advantageously possible according to the present invention to use the increased and network slice-specific granularity of the access probability of a user equipment also in further mobile communication networks and/or in a roaming situation of the user equipment.

The present invention also relates to a system according to claim 9.

Additionally, the present invention relates to a program comprising a computer readable program code which, when executed on a computer or on a network node of a mobile communication network, causes the computer or the network node of the mobile communication network to perform an inventive method.

Furthermore, the present invention relates to a computer program product for controlling the access of a user equipment to a mobile communication network, the computer program product comprising a computer program stored on a storage medium, the computer program comprising program code which, when executed on a computer or on a network node of a mobile communication network, causes the computer or the network node of the mobile communication network to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

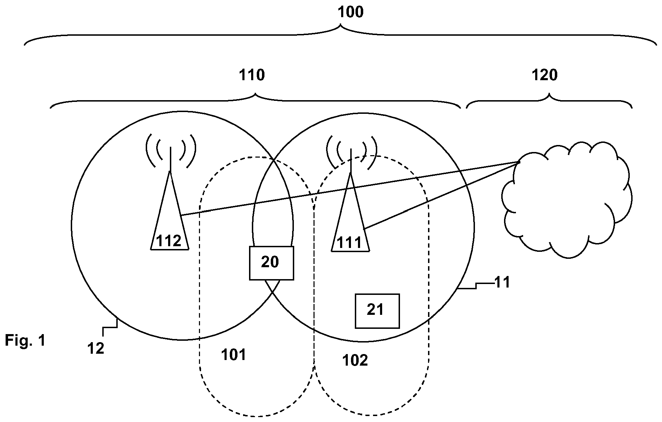

Figure 1 illustrates schematically a mobile communication network with a user equipment and two network slices.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

In Figure 1, a mobile communication network 100, especially a public land mobile network 100, is schematically shown. The mobile communication network 100 comprises an access network 110 and a core network 120. The mobile communication network 100 is preferably a cellular telecommunications network comprising typically a plurality of network cells (or radio cells), wherein two network cells (or radio cells) are represented in Figure 1 by means of reference signs 11 and 12. The mobile communication network 100 typically comprises a plurality of user equipments or mobile communication devices. The plurality of user equipments or of mobile communication devices are referred to by means of reference signs 20 and 21, wherein reference sign 20 refers to a first user equipment, and reference sign 21 refers to a second user equipment. The access network 110 of the mobile communication network 100 comprises, in the exemplary representation of Figure 1, a first base station entity 111, serving the (first) radio cell 11. Furthermore, a second base station entity 112, serving the neighbor (second) radio cell 12, is schematically shown. The base station entities 111, 112 are typically base stations, base transceiver stations or base station entities, e.g. a NodeB or an eNodeB base transceiver stations. Furthermore, a first network slice 101, and a second network slice 102 of the mobile communication network 100 are schematically shown in Figure 1 by means of dashed lines.

According to the present invention, the access of a user equipment 20 to a mobile communication network 100 is controlled in an enhanced manner. The mobile communication network 100 comprises a plurality of radio cells 11, 12 as part of an access network 110 of the mobile communication network 100, and the mobile communication network has at least one network slice 101. The user equipment 20 - being located, among other user equipments 21, in a considered (or specific) radio cell 11 of the plurality of radio cells 11, 12 - is attempting to gain access to the mobile communication network 100 using the network slice 101 of the mobile communication network 100 usable within the specific radio cell 11.

According to a first variant of the present invention, it is supposed that an access barring of user equipments (or of user equipment access attempts) is applied within the specific radio cell 11 based on access categories assigned to such user equipment attempts such that a predetermined barring probability is applied to access attempts of such user equipments. According to the present invention, the access probability for the user equipment 20 of gaining access to the mobile communication network 100 using the network slice 101 is adapted compared to using an access-category-barring-mechanism or (unified access control-mechanism). According to a second variant of the present invention, the access probability for the user equipment 20 of gaining access to the mobile communication network 100 using the network slice 101 is adapted in a network slice-specific manner.

In a first step according to the present invention, a network slice priority information is stored in or transmitted to the user equipment 20 or a secure element (not specifically shown in Figure 1 but corresponding to a subscriber identity module (such as a SIM card or USIM card or UICC or embedded UICC) of the user equipment 20, wherein the network slice priority information indicates an adaption of an access priority, regarding the user equipment 20 attempting to gain access to the mobile communication network 100 using the network slice 101. In a second step, subsequent to the first step, the user equipment 20, using the network slice 101, is provided access to the mobile communication network 100 taking into account the adaption of the access priority.

According to the present invention, the use of the network slice priority information (i.e. using slice priority indication) helps providing a distinction between different network slices 101, 102 in terms of access categories barring. It advantageously allows to better protect the services and the users of a slice (or of slices) with more demands in terms of capacity, latency and availability. It can allow users of a certain slice or users of different slices to be with higher or lower priority in relation to an access barring-mechanism in different situations where the barring rules of access barring apply.

According to the present invention, the use of a slice priority indication (or network slice priority information) is proposed as an additional indication that can be assigned to each user equipment 20, 21 in a network slice or can be assigned only to certain user equipment in a network slice. This slice priority indication can be part of the user equipment subscription profile as additional indication to one, more than one or all of the slices part of the user equipment subscription profile. According to the present invention, this network slice priority information can be provided to the user equipment 20 via a Unified Data Management function. This network slice priority indication can be also pre-configured in a user equipment (i.e. in a secure element within the user equipment or associated with the user equipment, such as a USIM, a UICC, or directly within the user equipment) as additional indication to one, more than one or all of the configured user equipments in a network slice. The network slice priority indication can can be provided to the user equipment (or to the USIM, UICC or directly in the UE) via OTA (i.e. an over-the-air mechanism).

The network slice priority indication allows in the context of the present invention that the access barring (i.e. the access probability resulting from applying an access barring mechanism) is not valid for this user equipment only in the network slice which the network slice priority information is indicating (i.e. in a network slice-specific manner). For example, a user equipment can have, as allowed slices, the following slices: eMBB and MIOT; but only for MIOT to have a slice priority indication. This means that that the access barring will not be valid in the MIOT network slice.

The slice priority indication can be used in a positive way (i.e. increasing the access probability): Only for user equipments with a slice priority indication such that the access barring shall be not valid in the respective slice. For example, if for access category 6 the access barring mechanism indicates a barring probability of 50% (i.e. 50% of the calls are to be barred), the barring will not be applied for user equipments having this slice priority indication. It can also be used as a correction factor: for example, if for AC6 50% of the attempts shall be barred in the network, the user equipment having AC6 and this slice priority indication with correction factor (e.g. configured to correspond to 20%) - only 20% of the barring percentage for the AC6 will be applied for this user equipment in this slice (i.e. resulting in a barring level of, e.g., 10% = 50% multiplied by 20%).

The slice priority indication can also be used in a negative way (i.e. reducing the access probability): for user equipments with such indication, the access barring in the network shall be valid in that slice also. For example, if for access category 6, there is an active configuration of 50% of the calls to be barred in the network due to overload, the barring will be applied also for that user equipment. The slice priority indication can also have a correction factor to the access barring: for example, if for AC6, 50% of the attempts shall be barred, the user equipment having AC6 and this category with correction factor (e.g. configured to correspond to 20%), 20% more barring will be applied for this user equipment in this network slice (i.e. 70% will be barred: 20% more than the 50% barring for the AC6).

The slice priority indication is preferably also transferred in roaming network, where - if supported (based on interconnect agreements) - the same function (or rules) are able to be applied.

Furthermore, the network slice priority indication is able to be transmitted (broadcasted) from a network element as a characteristic of a network slice together with the slice information. In a network with dynamically activated access barring (due to overload), broadcasted slice priority indication can stop using of access barring in this slice. It can be used also in a negative way - only in this slice access barring to be valid/started.

The slice priority indication - when broadcasted regarding a certain slice or set of slices - can be used in a positive way (e.g. for all user equipments in a particular slice(s) with broadcasted slice priority indication, access barring will not be valid regarding a specific access category): For example, if for access category 5 (access category 5 is MMTEL video) there is a configuration of 50% of the access attempts to be barred in the particular part of the network, the barring will not be applied for all user equipments in this slice(s). For all other user equipments in other slices in that part of the network without slice priority indication, the access barring regarding access attempts will be valid. The slice priority indication can also have correction factor (which can also be broadcasted): For example, if for AC5 50% of all the attempts shall be barred in the network, the user equipments in a slice with slice priority indication and correction factor (e.g. configured to correspond to 20%) broadcasted - only 20% of this barring will be applied, resulting in 10% barring (40% less than AC5 50%).

In case of overload for a particular part of the network due to different reasons (disaster), all the slices can become overloaded. There can be also Mission Critical Services Slice, which normally is dimensioned for a certain number of users. In that case, there are many Mission Critical Services Users needed and not enough resources are available. In such a case, there could be a need for a faster allocation of more resources by offloading another slice and cleaning resources for Mission Critical Services users. Offloading of a network slice can happen with an offload message broadcasted in the selected for offload slice. If access barring is already active in that slice, offload message can additionally free resources in terms of terminating already established sessions (for example voice, data, video) in the whole slice. Offloading message can be valid to users which are not with a priority in that slice. Thus the users with slice priority indication which are also subscribed for that freed slice could have more capacity right away when needed.

## Claims

1. Method for controlling the access of a user equipment (20) to a mobile communication network (100), the mobile communication network (100) comprising a plurality of radio cells (11, 12) as part of an access network (110) of the mobile communication network (100), and the mobile communication network (100) having a network slice (101) and at least one further network slice (102), wherein the user equipment (20) - being located, among other user equipments, in a specific radio cell (11) of the plurality of radio cells (11, 12) - is attempting to gain access to the mobile communication network (100) using the network slice (101) of the mobile communication network (100) usable within the specific radio cell (11),
-- wherein an access barring of user equipment attempts within the specific radio cell (11) is applied based on access categories assigned to such user equipment attempts such that a predetermined barring probability is applied to such user equipment attempts - the access probability for the user equipment (20) of gaining access to the mobile communication network (100) using the network slice (101) is adapted compared to using a unified access control-mechanism, or
-- wherein the access probability for the user equipment (20) of gaining access to the mobile communication network (100) using the network slice (101) is adapted in a network slice-specific manner,
wherein the method comprises the following steps:
-- in a first step, a network slice priority information is stored in or transmitted to the user equipment (20) or a secure element of the user equipment (20), wherein the network slice priority information indicates an adaption of an access priority, regarding the user equipment (20) attempting to gain access to the mobile communication network (100) using the network slice (101),
-- in a second step, subsequent to the first step, the user equipment (20), using the network slice (101), is provided access to the mobile communication network (100) taking into account the adaption of the access priority,
wherein the adaption of the access priority - regarding the network slice (101) by means of using the network slice priority information - corresponds to maximally increasing the access probability such that an access barring based on a unified access control-mechanism is avoided or switched off; or corresponds to increasing or reducing the access probability compared to the probability applying an access barring based on a unified access control-mechanism.

2. Method according to claim 1, wherein - besides the network slice (101) - the at least one further network slice (102) of the mobile communication network (100) is usable within the specific radio cell (11), wherein, in the first step, a further network slice priority information is stored in or transmitted to the user equipment (20) or a secure element of the user equipment (20), wherein the further network slice priority information indicates an adaption of a further access priority, regarding the user equipment (20) attempting to gain access to the mobile communication network (100) using the at least one further network slice (102), and wherein, in the second step, the user equipment (20), using the at least one further network slice (102), is provided access to the mobile communication network (100) taking into account the adaption of the further access priority within the at least one further network slice (102) by the further network slice priority information.

3. Method according to one of the preceding claims, wherein the network slice priority information and/or the further network slice priority information is specific to the user equipment (20), and especially part of the subscription profile or subscription information of the user equipment (20), wherein especially the network slice priority information specifically applies to the network slice (101) or applies to the network slice (101) and additionally to at least one further network slice (102) of the mobile communication network (100) and/or wherein especially the further network slice priority information specifically applies to the at least one further network slice (102) or applies to the at least one further network slice (102) and additionally to still another network slice of the mobile communication network (100), wherein especially the subscription profile or subscription information of the user equipment (20) is stored in a network node of the mobile communication network (100), especially in a network node providing unified data management functionality.

4. Method according to one of the preceding claims, wherein the network slice priority information is related to a plurality of or all user equipments within the specific radio cell (11) - besides the user equipment (20) at least one other user equipment -, wherein the network slice priority information is transmitted to the plurality of user equipments within at least the specific radio cell (11), especially by means of a cell broadcast mechanism or by means of an over-the-air mechanism, wherein especially the network slice priority information - being related to the plurality of or all user equipments within the specific radio cell (11), besides the user equipment (20) at least one other user equipment - specifically applies to the network slice (101) or applies to the network slice (101) and additionally to at least one further network slice (102) of the mobile communication network (100).

5. Method according to claim 2, wherein the adaption of the further access priority - regarding the at least one further network slice by the further network slice priority information - corresponds to maximally increasing the further access probability such that an access barring based on a unified access control-mechanism is avoided or switched off.

6. Method according to claim 2, wherein the adaption of the further access priority - regarding the at least one further network slice by the further network slice priority information - corresponds to increasing or reducing the further access probability, especially in the sense of a correction factor or correction value, compared to the probability applying an access barring based on a unified access control-mechanism.

7. Method according to one of the preceding claims, wherein - in order to be able to assign network capacity to the network slice (101), and in addition to a network slice-specific adaption of the access probability of the user equipment (20) being able to gain access to the mobile communication network (100) using the network slice (101) - an offload message is broadcast in the specific radio cell (11), wherein by means of the offload message at least one ongoing communication session is terminated, thereby freeing network resources being able to be assigned to the network slice (101), the network slice (101) especially being a mission critical service slice.

8. Method according to one of the preceding claims, wherein the network slice priority information is applied to the user equipment (20) in case the user equipment (20) is roaming and uses a network slice of a further mobile communication network compared to the mobile communication network (100).

9. System for controlling the access of a user equipment (20) to a mobile communication network (100), the system comprising the user equipment (20) and the mobile communication network (100), the mobile communication network (100) comprising a plurality of radio cells (11, 12) as part of an access network (110) of the mobile communication network (100), and the mobile communication network (100) having a network slice (101) and at least one further network slice (102), wherein the user equipment (20) - being located, among other user equipments, in a specific radio cell (11) of the plurality of radio cells (11, 12) - is configured to attempt to gain access to the mobile communication network (100) using the network slice (101) of the mobile communication network (100) usable within the specific radio cell (11),
-- wherein the mobile communication network (100) is configured to determine whether to apply an access barring of user equipment attempts within the specific radio cell (11) based on access categories assigned to such user equipment attempts such that a predetermined barring probability is applied to such user equipment attempts - the mobile communication network (100) is configured such that access probability for the user equipment (20) of gaining access to the mobile communication network (100) using the network slice (101) is adapted compared to using a unified access control-mechanism, or
-- wherein the mobile communication network (100) is configured such that the access probability for the user equipment (20) of gaining access to the mobile communication network (100) using the network slice (101) is adapted in a network slice-specific manner,
wherein the mobile communication network (100) is further configured such that:
-- a network slice priority information is stored in or transmitted to the user equipment (20) or a secure element of the user equipment (20), wherein the network slice priority information indicates an adaption of an access priority, regarding the user equipment (20) attempting to gain access to the mobile communication network (100) using the network slice (101),
-- the user equipment (20), using the network slice (101), is provided access to the mobile communication network (100) taking into account the adaption of the access priority,
wherein the adaption of the access priority - regarding the network slice (101) by means of using the network slice priority information - corresponds to maximally increasing the access probability such that an access barring based on a unified access control-mechanism is avoided or switched off; or corresponds to increasing or reducing the access probability compared to the probability applying an access barring based on a unified access control-mechanism.

10. Program comprising a computer readable program code which, when executed on a computer or on a network node of a mobile communication network (100), causes the computer or the network node of the mobile communication network (100) to perform a method according one of claims 1 to 8.

11. Computer program product for controlling the access of a user equipment (20) to a mobile communication network (100), the computer program product comprising a computer program stored on a storage medium, the computer program comprising program code which, when executed on a computer or on a network node of a mobile communication network (100), causes the computer or the network node of the mobile communication network (100) to perform a method according one of claims 1 to 8.

## Patentansprüche

1. Verfahren zum Steuern des Zugriffs einer Nutzerausrüstung (20) auf ein Mobilkommunikationsnetzwerk (100), wobei das Mobilkommunikationsnetzwerk (100) mehrere Funkzellen (11, 12) als Teil eines Zugangsnetzwerks (110) des Mobilkommunikationsnetzwerks (100) umfasst und das Mobilkommunikationsnetzwerk (100) einen Netzwerk-Slice (101) und mindestens einen weiteren Netzwerk-Slice (102) aufweist, wobei die Nutzerausrüstung (20) - die sich unter anderen Nutzerausrüstungen in einer spezifischen Funkzelle (11) der mehreren Funkzellen (11, 12) befindet - versucht, auf das Mobilkommunikationsnetzwerk (100) unter Verwendung des Netzwerk-Slices (101) des Mobilkommunikationsnetzwerks (100), der innerhalb der spezifischen Funkzelle (11) verwendbar ist, Zugriff zu erhalten,
- wobei eine Zugriffssperre von Nutzerausrüstungsversuchen innerhalb der spezifischen Funkzelle (11) basierend auf Zugriffskategorien angewandt wird, die diesen Nutzerausrüstungsversuchen zugeordnet sind, so dass eine vorbestimmte Sperrwahrscheinlichkeit auf diese Nutzerausrüstungsversuche angewandt wird, wobei die Zugriffswahrscheinlichkeit für die Nutzerausrüstung (20), auf das Mobilkommunikationsnetzwerk (100) unter Verwendung des Netzwerk-Slices (101) Zugriff zu erhalten, im Vergleich zu einer Verwendung eines Mechanismus einer einheitlichen Zugriffssteuerung angepasst wird, oder
- wobei die Zugriffswahrscheinlichkeit für die Nutzerausrüstung (20), auf das Mobilkommunikationsnetzwerk (100) unter Verwendung des Netzwerk-Slices (101) Zugriff zu erhalten, in einer Netzwerk-Slice-spezifischen Weise angepasst wird,
wobei das Verfahren die folgenden Schritte umfasst:
- in einem ersten Schritt wird eine Netzwerk-Slice-Prioritätsinformation in der Nutzerausrüstung (20) oder einem sicheren Element der Nutzerausrüstung (20) gespeichert oder dahin übertragen, wobei die Netzwerk-Slice-Prioritätsinformation eine Anpassung einer Zugriffspriorität in Bezug auf die Nutzerausrüstung (20) angibt, die versucht, auf das Mobilkommunikationsnetzwerk (100) unter Verwendung des Netzwerk-Slices (101) Zugriff zu erhalten,
- in einem zweiten Schritt, nachfolgend auf den ersten Schritt, wird der Nutzerausrüstung (20), die den Netzwerk-Slice (101) verwendet, Zugriff auf das Mobilkommunikationsnetzwerk (100) unter Berücksichtigung der Anpassung der Zugriffspriorität erteilt,
wobei die Anpassung der Zugriffspriorität - in Bezug auf den Netzwerk-Slice (101) durch Verwendung der Netzwerk-Slice-Prioritätsinformation - einer maximalen Erhöhung der Zugriffspriorität entspricht, so dass eine Zugriffssperre basierend auf einem Mechanismus einer einheitlichen Zugriffssteuerung vermieden oder ausgeschaltet wird; oder einer Erhöhung oder Reduzierung der Zugriffswahrscheinlichkeit im Vergleich zu der Wahrscheinlichkeit entspricht, die eine Zugriffssperre basierend auf einem Mechanismus einer einheitlichen Zugriffssteuerung anwendet.

2. Verfahren nach Anspruch 1, wobei - neben dem Netzwerk-Slice (101) - der mindestens eine weitere Netzwerk-Slice (102) des Mobilkommunikationsnetzwerks (100) innerhalb der spezifischen Funkzelle (11) verwendbar ist, wobei, in dem ersten Schritt, eine weitere Netzwerk-Slice-Prioritätsinformation in der Nutzerausrüstung (20) oder einem sicheren Element der Nutzerausrüstung (20) gespeichert oder dahin übertragen wird, wobei die weitere Netzwerk-Slice-Prioritätsinformation eine Anpassung einer weiteren Zugriffspriorität in Bezug auf die Nutzerausrüstung (20) angibt, die versucht, auf das Mobilkommunikationsnetzwerk (100) unter Verwendung des mindestens einen weiteren Netzwerk-Slices (102) Zugriff zu erhalten, und wobei, in dem zweiten Schritt, der Nutzerausrüstung (20), die den mindestens einen weiteren Netzwerk-Slice (102) verwendet, Zugriff auf das Mobilkommunikationsnetzwerk (100) unter Berücksichtigung der Anpassung der weiteren Zugriffspriorität innerhalb des mindestens einen weiteren Netzwerk-Slices (102) durch die weitere Netzwerk-Slice-Prioritätsinformation erteilt wird.

3. Verfahren nach einem der vorhergehenden Ansprüche, wobei die Netzwerk-Slice-Prioritätsinformation und/oder die weitere Netzwerk-Slice-Prioritätsinformation für die Nutzerausrüstung (20) und insbesondere für einen Teil des Teilnehmerprofils oder der Teilnehmerinformation der Nutzerausrüstung (20) spezifisch ist/sind, wobei die Netzwerk-Slice-Prioritätsinformation insbesondere spezifisch für den Netzwerk-Slice (101) gilt oder für den Netzwerk-Slice (101) und zusätzlich für mindestens einen weiteren Netzwerk-Slice (102) des Mobilkommunikationsnetzwerks (100) gilt und/oder wobei die weitere Netzwerk-Slice-Prioritätsinformation insbesondere spezifisch für den mindestens einen weiteren Netzwerk-Slice (102) gilt oder für den mindestens einen weiteren Netzwerk-Slice (102) und zusätzlich für noch einen weiteren Netzwerk-Slice des Mobilkommunikationsnetzwerks (100) gilt, wobei insbesondere das Teilnehmerprofil oder die Teilnehmerinformation der Nutzerausrüstung (20) in einem Netzwerkknoten des Mobilkommunikationsnetzwerks (100), insbesondere in einem Netzwerkknoten, der eine Funktion einer einheitlichen Datenverwaltung vorsieht, gespeichert wird.

4. Verfahren nach einem der vorhergehenden Ansprüche, wobei sich die Netzwerk-Slice-Prioritätsinformation auf mehrere oder alle Nutzerausrüstungen innerhalb der spezifischen Funkzelle (11) - neben der Nutzerausrüstung (20) mindestens eine andere Nutzerausrüstung - bezieht, wobei die Netzwerk-Slice-Prioritätsinformation an die mehreren Nutzerausrüstungen innerhalb mindestens der spezifischen Funkzelle (11), insbesondere mittels eines Cell-Broadcast-Mechanismus oder mittels eines Over-the-Air-Mechanismus, übertragen wird, wobei die Netzwerk-Slice-Prioritätsinformation - die sich auf die mehreren oder alle Nutzerausrüstungen innerhalb der spezifischen Funkzelle (11), neben der Nutzerausrüstung (20) mindestens eine andere Nutzerausrüstung, bezieht - insbesondere spezifisch für den Netzwerk-Slice (101) gilt oder für den Netzwerk-Slice (101) und zusätzlich für mindestens einen weiteren Netzwerk-Slice (102) des Mobilkommunikationsnetzwerks (100) gilt.

5. Verfahren nach Anspruch 2, wobei die Anpassung der weiteren Zugriffspriorität - in Bezug auf den mindestens einen weiteren Netzwerk-Slice durch die weitere Netzwerk-Slice-Prioritätsinformation - einer maximalen Erhöhung der weiteren Zugriffswahrscheinlichkeit entspricht, so dass eine Zugriffssperre basierend auf einem Mechanismus einer einheitlichen Zugriffssteuerung vermieden oder ausgeschaltet wird.

6. Verfahren nach Anspruch 2, wobei die Anpassung der weiteren Zugriffspriorität - in Bezug auf den mindestens einen weiteren Netzwerk-Slice durch die weitere Netzwerk-Slice-Prioritätsinformation - einer Erhöhung oder Reduzierung der weiteren Zugriffswahrscheinlichkeit, insbesondere im Sinne eines Korrekturfaktors oder eines Korrekturwerts, im Vergleich zu der Wahrscheinlichkeit, die eine Zugriffssperre basierend auf einem Mechanismus einer einheitlichen Zugriffssteuerung anwendet, entspricht.

7. Verfahren nach einem der vorhergehenden Ansprüche, wobei - um dem Netzwerk-Slice (101) eine Netzwerkkapazität zuweisen zu können, und zusätzlich zu einer Netzwerk-Slice-spezifischen Anpassung der Zugriffswahrscheinlichkeit der Nutzerausrüstung (20), die in der Lage ist, Zugriff auf das Mobilkommunikationsnetzwerk (100) unter Verwendung des Netzwerk-Slices (101) zu erhalten - eine Entlastungsnachricht in der spezifischen Funkzelle (11) ausgestrahlt wird, wobei mittels der Entlastungsnachricht mindestens eine laufende Kommunikationssitzung beendet wird, wodurch Netzwerkressourcen freigesetzt werden, die dem Netzwerk-Slice (101) zugewiesen werden können, wobei der Netzwerk-Slice (101) insbesondere ein Slice eines betriebskritischen Dienstes ist.

8. Verfahren nach einem der vorhergehenden Ansprüche, wobei die Netzwerk-Slice-Prioritätsinformation auf die Nutzerausrüstung (20) für den Fall angewandt wird, dass die Nutzerausrüstung (20) in einem Roaming-Modus arbeitet und einen Netzwerk-Slice eines weiteren Mobilkommunikationsnetzwerks im Vergleich zu dem Mobilkommunikationsnetzwerk (100) verwendet.

9. System zum Steuern des Zugriffs einer Nutzerausrüstung (20) auf ein Mobilkommunikationsnetzwerk (100), wobei das System die Nutzerausrüstung (20) und das Mobilkommunikationsnetzwerk (100) umfasst, wobei das Mobilkommunikationsnetzwerk (100) mehrere Funkzellen (11, 12) als Teil eines Zugangsnetzwerks (110) des Mobilkommunikationsnetzwerks (100) umfasst und das Mobilkommunikationsnetzwerk (100) einen Netzwerk-Slice (101) und mindestens einen weiteren Netzwerk-Slice (102) aufweist, wobei die Nutzerausrüstung (20) - die sich unter anderen Nutzerausrüstungen in einer spezifischen Funkzelle (11) der mehreren Funkzellen (11, 12) befindet - eingerichtet ist, um zu versuchen, auf das Mobilkommunikationsnetzwerk (100) unter Verwendung des Netzwerk-Slices (101) des Mobilkommunikationsnetzwerks (100), der innerhalb der spezifischen Funkzelle (11) verwendbar ist, Zugriff zu erhalten,
- wobei das Mobilkommunikationsnetzwerk (100) eingerichtet ist, um zu bestimmen, ob eine Zugriffssperre von Nutzerausrüstungsversuchen innerhalb der spezifischen Funkzelle (11) angewandt werden soll, basierend auf Zugriffskategorien, die diesen Nutzerausrüstungsversuchen zugeordnet sind, so dass eine vorbestimmte Sperrwahrscheinlichkeit auf diese Nutzerausrüstungsversuche angewandt wird, wobei das Mobilkommunikationsnetzwerk (100) eingerichtet ist, so dass die Zugriffswahrscheinlichkeit für die Nutzerausrüstung (20), auf das Mobilkommunikationsnetzwerk (100) unter Verwendung des Netzwerk-Slices (101) Zugriff zu erhalten, im Vergleich zu einer Verwendung eines Mechanismus einer einheitlichen Zugriffssteuerung angepasst wird, oder
- wobei das Mobilkommunikationsnetzwerk (100) eingerichtet, so dass die Zugriffswahrscheinlichkeit für die Nutzerausrüstung (20), auf das Mobilkommunikationsnetzwerk (100) unter Verwendung des Netzwerk-Slices (101) Zugriff zu erhalten, in einer Netzwerk-Slice-spezifischen Weise angepasst wird,
wobei das Mobilkommunikationsnetzwerk (100) ferner derart eingerichtet ist, dass:
- eine Netzwerk-Slice-Prioritätsinformation in der Nutzerausrüstung (20) oder einem sicheren Element der Nutzerausrüstung (20) gespeichert oder dahin übertragen wird, wobei die Netzwerk-Slice-Prioritätsinformation eine Anpassung einer Zugriffspriorität in Bezug auf die Nutzerausrüstung (20) angibt, die versucht, auf das Mobilkommunikationsnetzwerk (100) unter Verwendung des Netzwerk-Slices (101) Zugriff zu erhalten,
- der Nutzerausrüstung (20), die den Netzwerk-Slice (101) verwendet, Zugriff auf das Mobilkommunikationsnetzwerk (100) unter Berücksichtigung der Anpassung der Zugriffspriorität erteilt wird,
wobei die Anpassung der Zugriffspriorität - in Bezug auf den Netzwerk-Slice (101) durch Verwendung der Netzwerk-Slice-Prioritätsinformation - einer maximalen Erhöhung der Zugriffspriorität entspricht, so dass eine Zugriffssperre basierend auf einem Mechanismus einer einheitlichen Zugriffssteuerung vermieden oder ausgeschaltet wird; oder einer Erhöhung oder Reduzierung der Zugriffswahrscheinlichkeit im Vergleich zu der Wahrscheinlichkeit entspricht, die eine Zugriffssperre basierend auf einem Mechanismus einer einheitlichen Zugriffssteuerung anwendet.

10. Programm, umfassend einen computerlesbaren Programmcode, der, wenn er auf einem Computer oder einem Netzwerkknoten eines Mobilkommunikationsnetzwerks (100) ausgeführt wird, den Computer oder den Netzwerkknoten des Mobilkommunikationsnetzwerks (100) dazu veranlasst, ein Verfahren nach einem der Ansprüche 1 bis 8 durchzuführen.

11. Computerprogrammprodukt zum Steuern des Zugriffs einer Nutzerausrüstung (20) auf ein Mobilkommunikationsnetzwerk (100), wobei das Computerprogrammprodukt ein Computerprogramm umfasst, das auf einem Speichermedium gespeichert ist, wobei das Computerprogramm einen Programmcode umfasst, der, wenn er auf einem Computer oder auf einem Netzwerkknoten eines Mobilkommunikationsnetzwerks (100) ausgeführt wird, den Computer oder den Netzwerkknoten des Mobilkommunikationsnetzwerks (100) dazu veranlasst, ein Verfahren nach einem der Ansprüche 1 bis 8 durchzuführen.

## Revendications

1. Procédé pour commander l'accès d'un équipement utilisateur (20) à un réseau de communication mobile (100), le réseau de communication mobile (100) comprenant une pluralité de cellules radio (11, 12) faisant partie d'un réseau d'accès (110) du réseau de communication mobile (100), et le réseau de communication mobile (100) ayant une tranche de réseau (101) et au moins une tranche de réseau supplémentaire (102), dans lequel l'équipement utilisateur (20), qui est situé, parmi d'autres équipements utilisateur, dans une cellule radio (11) spécifique de la pluralité de cellules radio (11, 12), tente d'accéder au réseau de communication mobile (100) en utilisant la tranche de réseau (101) du réseau de communication mobile (100) qui est utilisable au sein de la cellule radio (11) spécifique,
- dans lequel une interdiction d'accès de tentatives d'équipement utilisateur au sein de la cellule radio (11) spécifique est appliquée d'après des catégories d'accès attribuées à de telles tentatives d'équipement utilisateur de sorte qu'une probabilité d'interdiction prédéterminée soit appliquée à de telles tentatives d'équipement utilisateur, la probabilité d'accès pour l'équipement utilisateur (20) d'obtenir l'accès au réseau de communication mobile (100) en utilisant la tranche de réseau (101) est adaptée en comparaison à l'utilisation d'un mécanisme de commande d'accès unifié, ou
- dans lequel la probabilité d'accès pour l'équipement utilisateur (20) d'obtenir l'accès au réseau de communication mobile (100) en utilisant la tranche de réseau (101) est adaptée d'une manière spécifique à la tranche de réseau,
dans lequel le procédé comprend les étapes suivantes :
- dans une première étape, une information de priorité de tranche de réseau est stockée dans ou transmise à l'équipement utilisateur (20) ou à un élément sécurisé de l'équipement utilisateur (20), dans lequel l'information de priorité de tranche de réseau indique une adaptation d'une priorité d'accès, concernant l'équipement utilisateur (20) tentant d'obtenir l'accès au réseau de communication mobile (100) en utilisant la tranche de réseau (101),
- dans une seconde étape, ultérieure à la première étape, l'équipement utilisateur (20), en utilisant la tranche de réseau (101), a accès au réseau de communication mobile (100) en tenant compte de l'adaptation de la priorité d'accès,
dans lequel l'adaptation de la priorité d'accès, concernant la tranche de réseau (101) au moyen de l'utilisation de l'information de priorité de tranche de réseau, correspond à une augmentation maximale de la probabilité d'accès de sorte qu'une interdiction d'accès d'après un mécanisme de commande d'accès unifié soit évitée ou désactivée ; ou correspond à une augmentation ou à une réduction de la probabilité d'accès en comparaison à la probabilité d'appliquer une interdiction d'accès d'après un mécanisme de commande d'accès unifié.

2. Procédé selon la revendication 1, dans lequel, hormis la tranche de réseau (101), l'au moins une tranche de réseau supplémentaire (102) du réseau de communication mobile (100) est utilisable au sein de la cellule radio (11) spécifique, dans lequel, dans la première étape, une information de priorité de tranche de réseau supplémentaire est stockée dans ou transmise à l'équipement utilisateur (20) ou à un élément sécurisé de l'équipement utilisateur (20), dans lequel l'information de priorité de tranche de réseau supplémentaire indique une adaptation d'une priorité d'accès supplémentaire, concernant l'équipement utilisateur (20) tentant d'obtenir l'accès au réseau de communication mobile (100) en utilisant l'au moins une tranche de réseau supplémentaire (102), et dans lequel, dans la seconde étape, l'équipement utilisateur (20), en utilisant l'au moins une tranche de réseau supplémentaire (102), a accès au réseau de communication mobile (100) en tenant compte de l'adaptation de la priorité d'accès supplémentaire au sein de l'au moins une tranche de réseau supplémentaire (102) par l'information de priorité de tranche de réseau supplémentaire.

3. Procédé selon l'une des revendications précédentes, dans lequel l'information de priorité de tranche de réseau et/ou l'information de priorité de tranche de réseau supplémentaire sont spécifiques à l'équipement utilisateur (20), et font notamment partie du profil d'abonnement ou de l'information d'abonnement de l'équipement utilisateur (20), dans lequel notamment l'information de priorité de tranche de réseau s'applique spécifiquement à la tranche de réseau (101) ou s'applique à la tranche de réseau (101) et de plus à au moins une tranche de réseau supplémentaire (102) du réseau de communication mobile (100) et/ou dans lequel notamment l'information de priorité de tranche de réseau supplémentaire s'applique spécifiquement à l'au moins une tranche de réseau supplémentaire (102) ou s'applique à l'au moins une tranche de réseau supplémentaire (102) et de plus à encore une autre tranche de réseau du réseau de communication mobile (100), dans lequel notamment le profil d'abonnement ou l'information d'abonnement de l'équipement utilisateur (20) est stocké(e) dans un nœud de réseau du réseau de communication mobile (100), notamment dans un nœud de réseau fournissant une fonctionnalité de gestion de données unifiée.

4. Procédé selon l'une des revendications précédentes, dans lequel l'information de priorité de tranche de réseau est liée à une pluralité ou à la totalité d'équipements utilisateur au sein de la cellule radio (11) spécifique, hormis l'équipement utilisateur (20) au moins un autre équipement utilisateur, dans lequel l'information de priorité de tranche de réseau est transmise à la pluralité d'équipements utilisateur au sein au moins de la cellule radio (11) spécifique, notamment au moyen d'un mécanisme de radiodiffusion de cellule ou au moyen d'un mécanisme de liaison hertzienne, dans lequel notamment l'information de priorité de tranche de réseau, qui est liée à la pluralité ou à la totalité d'équipements utilisateur au sein de la cellule radio (11) spécifique, hormis l'équipement utilisateur (20) au moins un autre équipement utilisateur, s'applique spécifiquement à la tranche de réseau (101) ou s'applique à la tranche de réseau (101) et de plus à au moins une tranche de réseau supplémentaire (102) du réseau de communication mobile (100).

5. Procédé selon la revendication 2, dans lequel l'adaptation de la priorité d'accès supplémentaire, concernant l'au moins une tranche de réseau supplémentaire par l'information de priorité de tranche de réseau supplémentaire, correspond à une augmentation maximale de la probabilité d'accès supplémentaire de sorte qu'une interdiction d'accès d'après un mécanisme de commande d'accès unifié soit évitée ou désactivée.

6. Procédé selon la revendication 2, dans lequel l'adaptation de la priorité d'accès supplémentaire, concernant l'au moins une tranche de réseau supplémentaire par l'information de priorité de tranche de réseau supplémentaire, correspond à une augmentation ou à une réduction de la probabilité d'accès supplémentaire, notamment dans le sens d'un facteur de correction ou d'une valeur de correction, en comparaison à la probabilité d'appliquer une interdiction d'accès d'après un mécanisme de commande d'accès unifié.

7. Procédé selon l'une des revendications précédentes, dans lequel, afin d'être capable d'attribuer une capacité de réseau à la tranche de réseau (101), et en plus d'une adaptation spécifique à la tranche de réseau de la probabilité d'accès de l'équipement utilisateur (20) qui est capable d'accéder au réseau de communication mobile (100) en utilisant la tranche de réseau (101), un message de délestage est radiodiffusé dans la cellule radio (11) spécifique, dans lequel au moyen du message de délestage au moins une session de communication en cours se termine, libérant ainsi des ressources de réseau qui sont capables d'être attribuées à la tranche de réseau (101), la tranche de réseau (101) étant notamment une tranche de réseau essentielle à la mission.

8. Procédé selon l'une des revendications précédentes, dans lequel l'information de priorité de tranche de réseau est appliquée à l'équipement utilisateur (20) dans un cas où l'équipement utilisateur (20) est itinérant et utilise une tranche de réseau d'un réseau de communication mobile supplémentaire en comparaison au réseau de communication mobile (100).

9. Système pour commander l'accès d'un équipement utilisateur (20) à un réseau de communication mobile (100), le système comprenant l'équipement utilisateur (20) et le réseau de communication mobile (100), le réseau de communication mobile (100) comprenant une pluralité de cellules radio (11, 12) faisant partie d'un réseau d'accès (110) du réseau de communication mobile (100), et le réseau de communication mobile (100) ayant une tranche de réseau (101) et au moins une tranche de réseau supplémentaire (102), dans lequel l'équipement utilisateur (20), qui est situé, parmi d'autres équipements utilisateur, dans une cellule radio (11) spécifique de la pluralité de cellules radio (11, 12), est configuré pour tenter d'obtenir l'accès au réseau de communication mobile (100) en utilisant la tranche de réseau (101) du réseau de communication mobile (100) utilisable au sein de la cellule radio (11) spécifique,
- dans lequel le réseau de communication mobile (100) est configuré pour déterminer la nécessité d'appliquer une interdiction d'accès de tentatives d'équipement utilisateur au sein de la cellule radio (11) spécifique d'après des catégories d'accès attribuées à de telles tentatives d'équipement utilisateur de sorte qu'une probabilité d'interdiction prédéterminée soit appliquée à de telles tentatives d'équipement utilisateur, le réseau de communication mobile (100) est configuré de sorte que la probabilité d'accès pour l'équipement utilisateur (20) d'obtenir l'accès au réseau de communication mobile (100) en utilisant la tranche de réseau (101) soit adaptée en comparaison à l'utilisation d'un mécanisme de commande d'accès unifié, ou
- dans lequel le réseau de communication mobile (100) est configuré de sorte que la probabilité d'accès pour l'équipement utilisateur (20) d'obtenir l'accès au réseau de communication mobile (100) en utilisant la tranche de réseau (101) est adaptée d'une manière spécifique à la tranche de réseau,
dans lequel le réseau de communication mobile (100) est en outre configuré de sorte que :
- une information de priorité de tranche de réseau soit stockée dans ou transmise à l'équipement utilisateur (20) ou à un élément sécurisé de l'équipement utilisateur (20), dans lequel l'information de priorité de tranche de réseau indique une adaptation d'une priorité d'accès, concernant l'équipement utilisateur (20) tentant d'obtenir l'accès au réseau de communication mobile (100) en utilisant la tranche de réseau (101),
- l'équipement utilisateur (20), en utilisant la tranche de réseau (101), ait accès au réseau de communication mobile (100) en tenant compte de l'adaptation de la priorité d'accès,
dans lequel l'adaptation de la priorité d'accès, concernant la tranche de réseau (101) au moyen de l'utilisation de l'information de priorité de tranche de réseau, correspond à une augmentation maximale de la probabilité d'accès de sorte qu'une interdiction d'accès d'après un mécanisme de commande d'accès unifié soit évitée ou désactivée ; ou correspond à une augmentation ou à une réduction de la probabilité d'accès en comparaison à la probabilité d'appliquer une interdiction d'accès d'après un mécanisme de commande d'accès unifié.

10. Programme comprenant un code de programme lisible par ordinateur qui, lorsqu'il est exécuté sur un ordinateur ou sur un nœud de réseau d'un réseau de communication mobile (100), amène l'ordinateur ou le nœud de réseau du réseau de communication mobile (100) à réaliser un procédé selon l'une des revendications 1 à 8.

11. Produit-programme d'ordinateur pour commander l'accès d'un équipement utilisateur (20) à un réseau de communication mobile (100), le produit-programme d'ordinateur comprenant un programme d'ordinateur stocké sur un support de stockage, le programme d'ordinateur comprenant un code de programme qui, lorsqu'il est exécuté sur un ordinateur ou sur un nœud de réseau d'un réseau de communication mobile (100), amène l'ordinateur ou le nœud de réseau du réseau de communication mobile (100) à réaliser un procédé selon l'une des revendications 1 à 8.
